# EUROPÄISCHE PATENTSCHRIFT

(11) **EP 1 571 105 B1**
(45) Veröffentlichungstag und Bekanntmachung des Hinweises auf die Patenterteilung: **05.12.2007**
(21) Anmeldenummer: 05000779.8
(22) Anmeldetag: 15.01.2005
(51) Int. Cl.: B65G 5/00, E21B 41/00

(54) **Verfahren und eine Anordnung zur Speicherung und dauerhaften Fixierung von in Wasser gelöstem CO2 in geologischen Formationen**
Method and arrangement for the storage of CO2 dissolved in water and its permanent fixation in geologic formations
Procédé et dispositif de stockage de CO2 dissous dans l'eau et sa fixation permanente dans des formations géologiques

(30) Priorität: 29.01.2004 DE 102004004689
(43) Veröffentlichungstag der Anmeldung: 07.09.2005
(73) Patentinhaber: Clauser, Christoph, Professor Dr., 52223 Stolberg/Breinig (DE); Stanjek, Helge, Professor Dr., 52072 Aachen (DE); Peiffer, Stefan, Professor Dr., 95445 Bayreuth (DE)
(72) Erfinder: Clauser, Christoph, Professor Dr., 52223 Stolberg/Breinig (DE); Stanjek, Helge, Professor Dr., 52072 Aachen (DE); Peiffer, Stefan, Professor Dr., 95445 Bayreuth (DE)
(74) Vertreter: Kohlmann, Kai

(56) Entgegenhaltungen:
- US-A- 4 244 190
- US-A- 5 397 553
- US-A- 5 965 031
- US-B1- 6 216 463
- PATENT ABSTRACTS OF JAPAN Bd. 017, Nr. 306 (M-1428), 11. Juni 1993 (1993-06-11) & JP 05 025986 A (NKK CORP), 2. Februar 1993 (1993-02-02)
- KONGSJORDEN H ET AL: "Saline aquifer storage of carbon dioxide in the sleipner project" WASTE MANAGEMENT, ELSEVIER, NEW YORK, NY, US, Bd. 17, Nr. 5-6, 1997, Seiten 303-308, XP004118883 ISSN: 0956-053X

## Beschreibung

Die Erfindung betrifft ein Verfahren und eine Anordnung zur Speicherung und dauerhaften Fixierung von in Wasser gelöstem CO₂ in Formationswasser führenden geologischen Formationen, wobei durch eine chemische Reaktion des CO₂ mit Mineralen in der Formation CO₂ in Form stabiler Minerale ausgefällt wird.

Die Verringerung des anthropogenen CO₂-Eintrages in die Atmosphäre ist von überragender Bedeutung für die Entwicklung des Weltklimas. Neben der Entwicklung emissionsarmer Kraftwerke ist die Speicherung und dauerhafte Fixierung von CO₂ in geologischen Formationen kurz- und mittelfristig eine wichtige Möglichkeit zur Erreichung des von der deutschen Bundesregierung formulierten Zieles der Reduktion des deutschen CO₂-Ausstoßes bis 2005 um 25 % bezogen auf das Jahr 1990.

Für eine Speicherung und Fixierung von CO₂ im geologischen Formationen stehen mehrere Verfahrensansätze zur Verfügung, die auch in der Vergangenheit untersucht und diskutiert wurden. Letztlich werden die unterschiedlichen Ansätze danach bewertet, wie sicher und dauerhaft sie eine Speicherung von CO₂ im Untergrund gestatten:
- Direkte Einlagerung von gasförmigem oder überkritischem CO₂ in ehemalige Erdgasreservoire;
- Physikalische Fixierung von CO₂-Molekülen an den Oberflächen von organischem Kohlenstoff im Untergrund (etwa Kohlen) durch Adsorption;
- [3], [5] [4],[6]: Chemische Reaktionen von in Wasser gelöstem CO₂ mit geeigneten Mineralen in Formationswasser führenden Formationen und mit der damit einhergehenden Bindung und Ausfällung von CO₂ in Form sekundärer Karbonate.

Die Speicherung von CO₂ in Formationswasser führenden Formationen (salinare Aquifere) verändert deren hydrodynamisches und geochemisches Gleichgewicht. Dabei kann ein Teil des im Reservoir gelösten CO₂ unter geeigneten Bedingungen dauerhaft als Karbonat in der porösen Gesteinsmatrix der Formation ausfallen. Dies hat auf Grund seiner Auswirkungen auf die Porosität einen starken Einfluss auf die hydraulische Durchlässigkeit und kann sich damit auf die Speichereigenschaften des Aquifers auswirken.

Weltweit werden seit einiger Zeit die Vor- und Nachteile der unterschiedlichen Möglichkeiten zur CO₂-Deponierung untersucht. Hinsichtlich der hierfür erforderlichen Technologien kann bezüglich einiger Aspekte auf bereits vorhandene Lösungen zurückgriffen werden, wie sie bei der Bewirtschaftung von Erdöl- und Erdgaslagerstätten verwendet werden. Dies betrifft vor allem die Erschließung und Bewirtschaftung geeigneter Gasspeicher. Gegenwärtig werden im norwegischen Sektor der Nordsee ([1] Korbol und Kaddour, 1995) und im Alberta Becken in Kanada ([2] Gunter et al., 1996) Versuche unternommen, CO₂-Gas dauerhaft in tiefen Formationen zu speichern. Auswirkungen der CO₂-Speicherung auf das komplexe physikalisch-chemische System in einem Reservoir können auf Grund der lang andauernden geochemischen Prozesse nur mit Hilfe der numerischen Simulation untersucht werden. Erste Studien hierzu behandeln insbesondere das Problem von Grundwasserkontaminierung infolge der durch CO₂-Migration verdrängten salinaren Fluide, Zementationsprozesse in tonigen Deckschichten über solchen CO₂-Blasen und die Auswirkungen von Tonstrukturen innerhalb eines Aquifers auf die Abnahme der Migrationsgeschwindigkeit von CO₂-Gasblasen und die hieraus resultierende Zunahme von gelöstem CO₂ ([3] Johnson et al. 2001; [4] White et al., 2001; [5] McPherson & Lichtner, 2001).

Darüber hinaus wurde von [6] Xu et al. (2003) die spezifische Speicherkapazität von CO₂ durch Lösung und Ausfällung von in Mineralen gebundenem CO₂ unter geeigneten Bedingungen am Beispiel eines Küstenaquifers in den USA auf 10 kg CO₂ pro m³ Fluid berechnet.

Ferner ist aus der US-A- 5 965 031 ist ein Verfahren zur Verhinderung der Ausfällung von Mineralen in den oberirdischen Röhrensystemen und den Förder- und Einspeisebohrungen geothermischer Anlagen bekannt. Durch die Oxidation von Schwefelwasserstoff zu Schwefeldioxid wird die Abgabe von Schwefelwasserstoffgas durch das geothermische Kraftwerk in die Atmosphäre reduziert. Im geothermischen Reservoir sorgt die Injektion von Schwefeldioxid bzw. schwefliger Säure für eine Erniedrigung des pH-Wertes, der eine Bildung von Silikat- bzw. Karbonatmineralen oder Metallsulfiden auf den inneren Oberflächen der geothermischen Anlage und die Verstopfung der Einspeisebohrungen verhindert. Die Speicherung un Fixierung von CO2 ist nicht Gegenstand dieser Veröffentlichnung.

Auch die US-A- 4,244,190 betrifft ein Verfahren, das in erster Linie dazu dient, zu verhindern, dass Karbonatminerale, vor allem Kalzit, in geothermischen Förder- und Einspeisebohrungen und den oberirdischen Rohrleitungen ausgefällt werden und Schwefelwasserstoff an die Atmosphäre abgegeben wird. Die beschriebenen Prozesse und Reaktionen führen dazu, dass aller Schwefelwasserstoff zu Schwefeldioxid umgewandelt wird. Kohlendioxid dient hierbei vor allem dazu, die Karbonat-Ionen in Lösung zu halten und eine Karbonatausfällung in der Bohrung *und im geothermischen Reservoir* zu verhindern.

Ausgehend von diesem Stand der Technik liegt der Erfindung die Aufgabe zugrunde, ein Verfahren der eingangs erwähnten Art vorzuschlagen, das eine über die Speicherung des CO₂ hinausgehende Reduktion der Umweltbelastung ermöglicht.

Dies Aufgabe wird bei einem Verfahren der eingangs erwähnten Art dadurch gelöst, dass eine Formation mit solchen calciumhaltigen Mineralen ausgewählt wird, deren Löslichkeit mit abnehmender Temperatur zunimmt und zur Ausfällung der stabilen Minerale das Formationswasser in der Formation abgekühlt wird und die bei der Abkühlung gewonnene Wärme zu Heizzwecken und/oder Energieerzeugung verwendet wird.

Die Erfindung macht sich die Erkenntnis zu nutze, dass es Formationen gibt, deren Formationswasser zur Ausfällung stabiler CO₂ bindender Minerale gekühlt werden müssen. Des weiteren beruht die Erfindung auf dem Gedanken, dass die bei der Kühlung freigesetzte Wärme zur Energiegewinnung genutzt werden kann und damit eine weitere Entlastung der Umwelt nach sich zieht. Die Kühlung des aufgrund der geothernischen Tiefenstufe warmen Formationswassers erfolgt durch den Eintrag von Wasser geringerer Temperatur von der Erdoberfläche in die Formation sowie durch die Förderung warmen Formationswassers aus der Formation an die Erdoberfläche, wo die von dem Formationswasser transportierte Erdwärme zu Heizzwecken und/oder Energieverwendung genutzt werden kann.

Die dauerhafte Speicherung und Fixierung von CO₂ in Formationen im Untergrund wird durch chemische Bindung von CO₂ in Form stabiler Minerale, insbesondere Calciumcarbonat erreicht. Für die damit einhergehenden chemischen Reaktionen kommen daher Formationen mit calciumhaltigen Mineralen in Betracht, wie Feldspäte oder Sulfate (z. B. Anhydrit: CaSO₄; Gips: CaSO₄×H₂O). Besonders geeignet sind Anhydrit bzw. Gips-Formationen.

Das warme Formationswasser steht mit dem Anhydrit / Gips im Gestein im chemischen Gleichgewicht. Da Anhydrit / Gips bzgl. der Temperatur ein retrograde Löslichkeit aufweist, muss das warme Formationswasser abgekühlt werden. Nur so kann es sich mit Calciumsulfat anreichern und anschließend CaCO₃ ausfällen. Die bei der Abkühlung des warmen Formationswassers gewonnene Wärme kann, wie es in an sich bekannten Anlagen zur Erdwärmenutzung bereits praktiziert wird, zu Heizzwecken verwendet oder in Strom gewandelt werden. Die Erdwärmenutzung reduziert den Energieaufwand für die Kühlung der Formationswässer. Darüber hinaus wird durch die Erdwärmenutzung ein zusätzlicher, das Klima schonender und daher umweltpolitisch erstrebenswerter Effekt erzielt.

Ein wichtiges Merkmal der erfindungsgemäßen mineralischen Umwandlung der Sulfat-Minerale Anhydrit / Gips besteht darin, dass eine Auflösung von Calciumsulfat und anschließende Ausfällung von Calciumcarbonat mit einer Volumenverringerung von etwa 25 % für Anhydrit und 50 % für Gips einhergeht. Für eine Speicherung und Fixierung von CO₂ in der Formation durch Ausfällung von Calciumcarbonat ist dies deshalb von Vorteil, weil der Umwandlungsprozess die Formation nicht versiegelt und auf diese Weise den Prozess der CO₂-Speicherung zum Erliegen bringt; vielmehr steigt die Porosität der Gesteinsmatrix der Formation im Laufe der Anwendung des erfindungsgemäßen Verfahrens sogar kontinuierlich an, sodass die mit CO₂ übersättigten Formationswässer, insbesondere Solen, immer weiter entfernte Teile der Formation erreichen können.

In den gekühlten, mit Sulfat-Mineralen, insbesondere Anhydrit / Gips angereicherten Formationswässern kann CO₂ als CaCO₃ gebunden werden, wenn die Formationswässer alkalisch sind (pH 6-7). Sofern das Formationswasser nicht bereits alkalisch ist (pH-Wert 6-7), wird es erfindungsgemäß durch Einbringen alkalischer Substanzen auf einen alkalischen pH-Wert gebracht.

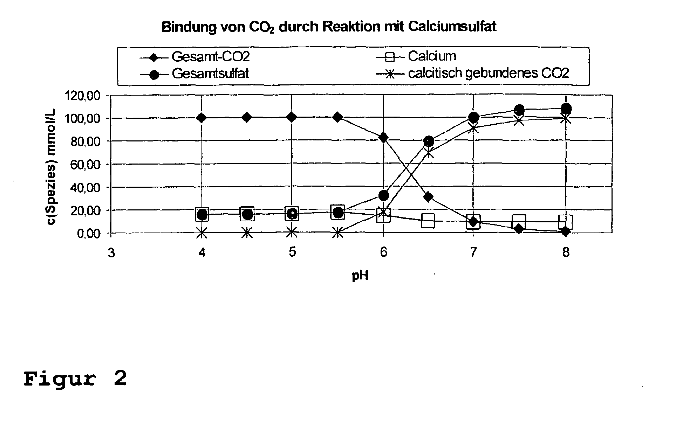

**Figur 2** veranschaulicht eine Modellrechung zur CO₂-Speicherung und Fixierung als CaCO₃ durch die Reaktion von CO₂ mit Gips entlang eines pH-Gradienten (Anfangsbedingung: P_{CO2} = 3 atm). Berechnungen zeigen, dass hierbei für 1 Mol CO₂ 1,7 Mol (OH)⁻ erforderlich sind. Die Alkalinität ist somit ein limitierender Faktor für die Effektivität des mineralischen Umwandlungsprozesses.

Besonders geeignete Formationen zur Durchführung des erfindungsgemäßen Verfahrens sind tiefe, Wasser führende Schichten (Aquifere) mit Sulfat-Mineralen, wie Anhydrit bzw. Gips. Gegenüber anderen geologischen Formationen (z. B. erschöpfte Erdöl- und Ergaslagerstätten) bieten Sie den Vorteil, dass sie weit verbreitet anzutreffen sind und leicht erschlossen werden können. Aus diesem Grund lassen sich die Transportwege vom Ort der CO₂-Produktion (Kraftwerk) bis hin zur Formation kurz gestalten und damit sind die durch den Transport anfallenden Kosten minimal.

Eine Anwendung des erfindungsgemäßen Verfahrens kommt insbesondere in räumlicher Nähe zu einer geothermischen Heizzentrale in Betracht, in der 50-100 m³/h Wasser umgesetzt werden.

Die großen Sedimentbecken, wie z. B. in Norddeutschland, sind grundsätzlich für eine untertägige Speicherung von CO₂ geeignet, da sie aus bis zu 10.000 m von Sedimenten bestehen, welche einen bestimmten Anteil an Calciumsulfaten enthalten. Schenck et al. (2000) unterscheiden sechs hydrothermale, tief gelegene Formationen. Diese eignen sich auf Grund ihrer hohen Porosität und Permeabilität und da sie noch oben hin abgeschlossen sind für eine Speicherung von CO₂. Die flacher gelegenen Formationen (< 2000 m Tiefe ) eignen sich ebenfalls grundsätzlich für eine CO₂-Speicherung, obwohl sie hinsichtlich einer Erdwärmenutzung wegen ihrer vergleichsweise geringen Temperaturdifferenz zur Erdoberfläche weniger effizient sind. In ihrer Untersuchung des geothermischen Potenzials des Rhät-Aquifers in Schleswig-Holstein schätzen Schenck et al. (2000) deren Volumen zwar auf etwa 10¹⁰ m³. Das durch mineralische Bindung im Rhät-Aquifer oder vergleichbaren Formationen deponierbare Gesamtvolumen an CO₂ hängt jedoch von der in ihnen enthaltenen Menge an Sulfatmineralen ab.

Anhydrit ist ein häufig in Sandsteinformationen enthaltenes Zementmineral, wie etwa in den Rhät- oder Buntsandsteinschichten. Teilweise befinden sich die Sulfat-Minerale in einer der Formation benachbarten Deckschicht. Das CO₂ kann in diesen Fällen dennoch durch Umwandlungsreaktionen in der Deckschicht an sekundäre Karbonate gebunden werden auch wenn die Formation, der das CO₂ zugegeben wurde frei von Sulfat-Mineralen ist. Für die Belange dieser Erfindung wird daher die Deckschicht als zu der Formation gehörig angesehen. Beispielsweise an einigen Stellen im nordostdeutschen Sedimentbecken befinden sich die Sulfat-Minerale in einer solchen Deckschicht.

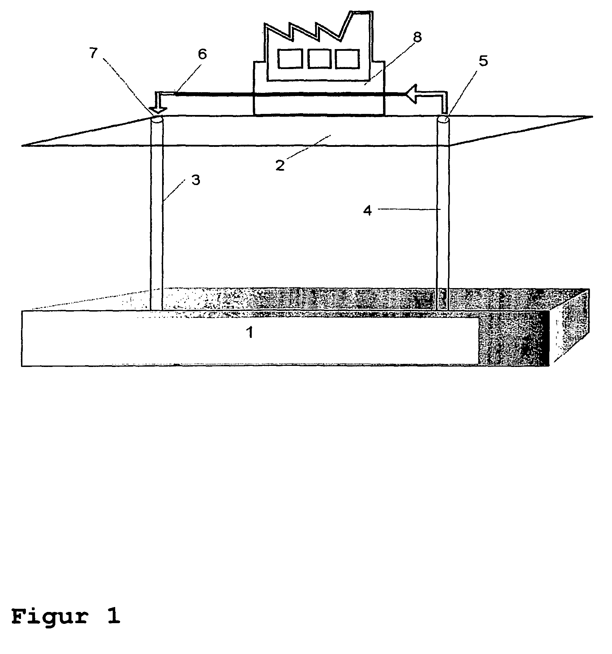

**Figur 1** zeigt eine schematische Darstellung einer Anordnung zur Durchführung des erfindungsgemäßen Verfahrens. Die insgesamt mit 1 bezeichnete Formation mit calciumhaltigen Mineralen, insbesondere Anhydrit, wird von der schematisch dargestellten Erdoberfläche 2 über eine Injektionsbohrung 3 sowie eine Förderbohrung 4 erschlossen. In ihrer porösen Gesteinsmatrix führt die Formation 1 salinare Formationswässer, die aufgrund der mit der Tiefe zunehmenden Temperatur (geothermische Tiefenstufe) eine deutlich höhere Temperatur aufweisen, als die Außentemperatur an der Erdoberfläche 2. Das aufgeheizte Formationswasser tritt über die Förderbohrung 4 als Heißwasser oder Heißdampf an einer Austrittsöffnung 5 an der Erdoberfläche in eine Leitung 6 ein, die mit der Austrittsöffnung 7 der Injektionsbohrung über eine Verbindungsleitung 6 verbunden ist.

Die Verbindungsleitung 6 wird über einen Wärmetauscher 8 geführt, der dem Heißwasser bzw. Heißdampf die Wärme entzieht und an ein anderes dampfförmiges oder flüssiges Medium abgibt, dass den Wärmetauscher 8 ebenfalls durchströmt. Diese Wärme kann entweder direkt zu Heizzwecken oder zur Energieerzeugung verwendet werden. Das den Wärmetauscher 8 in Richtung der Eintrittsöffnung 7 der Injektionsbohrung 3 verlassende, rückgekühlte Formationswasser wird über eine in der Figur 1 nicht dargestellte Pumpe, wieder in die Formation gefördert, wobei gleichzeitig über einen nahe der Eintrittsöffnung 7 angeordneten Einlass CO₂ in das Formationswasser eingebracht wird, das über die Injektionsbohrung mit dem Wasser und ggf. alkalischen Substanzen in die Formation verpresst wird. Die Pumpe ist beispielsweise als Tauchpumpe oder aber als in die Leitung 6 eingebaute Pumpe ausgeführt.

Durch die Zuführung des rückgekühlten Formationswassers wird das warme Formationswasser abgekühlt. Aufgrund der mit sinkender Temperatur abnehmenden Löslichkeit des Anhydrit reichert sich dieses in dem Formationswasser an, so dass anschließend Calciumkarbonat CaCO₃ ausfällt.

In einer alternativen Ausgestaltung der Erfindung sind die Austrittsöffnungen 5, 7 der Injektionsbohrung 3 sowie der Förderbohrung 4 nicht miteinander verbunden. Eine solche Ausgestaltung einer erfindungsgemäßen Anordnung zur Durchführung des Verfahrens kommt beispielsweise dann in Betracht, wenn das Formationswasser Trinkwasserqualität aufweist. In diesen Fällen kann das über die Förderbohrung 4 zu Tage geförderte Wasser bzw. Heißdampf über den Wärmetauscher 8 einer Trinkwasseraufbereitungsanlage zugeführt werden. Da das Wasser nicht im Kreislauf geführt wird, ist es dann allerdings erforderlich, die Austrittsöffnung 7 der Injektionsbohrung 3 mit einer Wasserquelle zu verbinden, wobei gewährleistet sein muss, dass die Temperatur des zugeführten Wassers unterhalb der Temperatur des Formationswassers liegt.

### Literatur:

[1] Korbol, R., and Kaddour, A., 1995. Sleipner vest CO2 disposal - Injection of removed CO2 into the Utsira Formation, Energy Convers. Manag., 36, 509-512, 1995.
[2] Gunter, W. D., Bachu, S., Law, D. H. S., Marwaha, V., Drysdale, D. L., MacDonald, D. E., and McCann, T. J., 1996. Technical and economic feasibility of CO2 disposal in aquifers within the Alberta Sedimentary Basin, Canada, Energy Convers. Manag., 37, 1135-1142, 1996.
[3] Johnson, J. W., J.J. Nitao, C.I. Steffel, and K.G. Knaus, 2001. Reactive transport modelling of geologic CO2 sequestration in saline aquifers: The influence of intraaquifer shales and the relative effectiveness of structural, solubility, and mineral trapping during prograde and retrograde sequestration, paper presented at First National Conference on Carbon Sequestration, Washington, DC, May 14-17, 2001.
[4] White, S. P., Weir, G. J., Kissling, W. M., 2001. Numerical Simulation of CO2 Sequestration in Natural CO2 Reservoirs on the Colorado Plateau, paper presented at First National Conference on Carbon Sequestration, Washington, DC, May 14-17, 2001.
[5] McPherson, B. J. O. L., Lichtner, P. C., 2001. CO2 Sequestration in Deep Aquifers, paper presented at First National Conference on Carbon Sequestration, Washington, DC, May 14-17, 2001.
[6] Xu, T., Apps, J. A., and Pruess, K., 2003. Reactive geochemical transport simulation to study mineral trapping for CO2 disposal in deep arenaceous formations, J. Geophys. Res., 108(B2), 2071, doi:10.1029/2002JB001979.
[7] Schenck, P-F, Kirsch, R., und Christensen, S., 2000. Das Geothermische Potential in Schleswig-Holstein, Zeitschrift für Angewandte Geologie, 46, 130-137.

## Patentansprüche

1. Verfahren zur Speicherung und dauerhaften Fixierung von in Wasser gelöstem CO₂ in Formationswasser führenden geologischen Formationen, wobei durch eine chemische Reaktion des CO₂ mit Mineralen in der Formation CO₂ in Form stabiler Minerale ausgefällt wird, **dadurch gekennzeichnet, dass**
- eine Formation mit solchen calciumhaltigen Mineralen ausgewählt wird, deren Löslichkeit mit abnehmender Temperatur zunimmt und
- zur Ausfällung der stabilen Minerale das Formationswasser in der Formation (1) abgekühlt wird und die bei der Abkühlung gewonnene Wärme zu Heizzwecken und/oder Energieerzeugung verwendet wird, wobei die Kühlung des aufgrund der geothermischen Tiefenstufe warmen Formationswassers durch den Eintrag von Wasser geringerer Temperatur von der Erdoberfläche (2) in die Formation sowie durch die Förderung warmen Formationswassers aus der Formation an die Erdoberfläche (2) erfolgt.

2. Verfahren nach Anspruch 1, **dadurch gekennzeichnet, dass** die Formation Sulfat-Minerale, insbesondere Anhydrit oder Gips enthält.

3. Verfahren nach Anspruch 1 oder 2, **dadurch gekennzeichnet, dass** das Formationswasser in der Formation durch Einbringen alkalischer Substanzen auf einen alkalischen pH-Wert gebracht wird.

4. Verfahren nach einem der Ansprüche 1 bis 3, **dadurch gekennzeichnet, dass** die geologische Formation über mindestens eine Injektionsbohrung und eine mindestens Förderbohrung erschlossen wird.

5. Verfahren nach Anspruch 4, **dadurch gekennzeichnet, dass** in Wasser gelöstes CO₂ über die Injektionsbohrung (3) der Formation (1) zugeführt wird, wobei die Temperatur des Wassers geringer als die des Formationswassers in der Formation ist und durch die Förderbohrung (4) Heißwasser oder Heißdampf aus der Formation an die Erdoberfläche gefördert wird.

6. Verfahren nach Anspruch 4 oder 5, **dadurch gekennzeichnet, dass** die Austrittsöffnung (7) mindestens einer Injektionsbohrung (3)und die Austrittsöffnung (5) mindestens einer Förderbohrung (4) unter Zwischenschaltung eines Wärmetauschers (8) miteinander verbunden werden.

7. Anordnung zur Durchführung des Verfahrens nach einem der Ansprüche 1 bis 6, **dadurch gekennzeichnet, dass** die geologische Formation (1) über mindestens eine Injektionsbohrung (3) mit einem Einlass zum Einbringen des CO2 und mindestens eine Förderbohrung (4) zum Fördern von Heißwasser oder Heißdampf aus der Formation (1) erschlossen ist.

8. Anordnung zur Durchführung des Verfahrens Anspruch 7, **dadurch gekennzeichnet, dass** die Austrittsöffnung (7) mindestens einer Injektionsbohrung (3) und die Austrittsöffnung (5) mindestens einer Förderbohrung (4) über eine einen Wärmetauscher (8) aufweisendende Leitung (6) miteinander verbunden sind und die Anordnung mindestens eine Pumpe zum Einpressen von Wasser mit CO₂ und ggf. Zusätzen in die Formation (1) aufweist.

## Claims

1. A method for storing and permanent fixation of CO₂ dissolved in water in geological formations bearing formation water, whereby CO₂ is precipitated in the form of stable minerals by a chemical reaction of the CO₂ with minerals in the formation,
**characterized in that**
- a formation having such calcium-bearing minerals is selected such that its solubility increases with a decrease in temperature, and
- to precipitate the stable minerals the formation water in the formation (1) is cooled and the heat extracted in cooling is used for heating purposes and/or to generate power, whereby the cooling of the formation water, which is hot due to the geothermal depth, is accomplished by injecting water at a lower temperature from the earth's surface (2) in to the formation and by conveying hot formation water out of the formation and to the earth's surface (2).

2. The method according to Claim 1,
**characterized in that**
the formation contains sulfate minerals, in particular anhydrite or gypsum.

3. The method according to Claim 1 or 2,
**characterized in that**
the formation water in the formation is brought to an alkaline pH by introducing alkaline substances.

4. The method according to any one of Claims 1 through 3,
**characterized in that**
the geological formation is developed through at least one injection drilling and at least one producing drilling.

5. The method according to Claim 4,
**characterized in that**
the CO₂ dissolved in water is supplied through the injection drilling (3) to the formation (1), whereby the temperature of the water is lower than the temperature of the formation water in the formation, and hot water or hot steam is conveyed out of the formation to the earth's surface through the producing drilling (4).

6. The method according to Claim 4 or 5,
**characterized in that**
the outlet opening (7) of at least one injection drilling (3) and the outlet opening (5) of at least one producing drilling (4) are interconnected with a heat exchanger (8) connected in between.

7. The arrangement for performing the method according to any one of Claims 1 through 6,
**characterized in that**
the geological formation (1) is developed through at least one injection drilling (3) with an inlet for introducing the CO₂ and at least one producing drilling (4) for delivering hot water or hot steam out of the formation (1).

8. The arrangement for performing the method according to the Claim 7,
**characterized in that**
the outlet opening (7) of at least one injection drilling (3) and the outlet opening (5) at least one producing drilling (4) are interconnected by a line (6) having a heat exchanger (8), and the arrangement has at least one pump for injecting water with CO₂ and optional additives into the formation (1).

## Revendications

1. Procédé destiné au stockage et à la séquestration de CO₂ en solution aqueuse dans des formations géologiques contenant de l'eau de formation, le CO₂ étant précipité sous forme de minéraux stables par une réaction chimique entre le CO₂ et des minéraux contenus dans la formation, **caractérisé en ce que**
- l'on choisit une formation comprenant des minéraux contenant du calcium dont la solubilité augmente lorsque la température baisse et
- l'eau de formation contenue dans la formation (1) est refroidie pour effectuer la précipitation desdits minéraux stables et la chaleur récupérée lors du refroidissement est utilisée à des fins de chauffage et/ou pour produire de l'énergie, ledit refroidissement l'eau de formation présentant une température élevée en raison du gradient géothermique étant réalisé en injectant de l'eau présentant une température plus basse depuis la surface terrestre (2) dans la formation ainsi qu'en extrayant de l'eau de formation chaude de la formation vers la surface terrestre (2).

2. Procédé selon la revendication 1, **caractérisé en ce que** la formation contient des minéraux de type sulfate, notamment de l'anhydrite ou du gypse.

3. Procédé selon les revendications 1 ou 2, **caractérisé en ce que** le pH de l'eau de formation située dans la formation est ajusté à une valeur du domaine alcalin par introduction de substances alcalines.

4. Procédé selon l'une des revendications 1 à 3, **caractérisé en ce que** la formation géologique est explorée à travers au moins un forage d'injection et au moins un forage d'extraction.

5. Procédé selon la revendication 4, **caractérisé en ce que** du CO₂ en solution aqueuse est introduit dans la formation (1) à travers le forage d'injection (3), la température de l'eau étant inférieure à celle de l'eau de formation contenue dans la formation et que de l'eau chaude ou de la vapeur chaude est extraite de la formation vers la surface terrestre à travers le forage d'extraction (4).

6. Procédé selon la revendication 4 ou 5, **caractérisé en ce que** la sortie (7) d'au moins un forage d'injection (3) est la sortie (5) d'au moins un forage d'extraction (4) sont reliées les unes aux autres en passant par un échangeur de chaleur (8).

7. Dispositif destiné à la mise en oeuvre du procédé selon l'une des revendications 1 à 6, **caractérisé en ce que** la formation géologique (1) est explorée à travers au moins un forage d'injection (3) pourvu d'une entrée destinée à l'introduction du CO₂ et au moins un forage d'extraction (4) destiné à extraire de la valeur chaude ou de l'eau chaude de la formation (1).

8. Dispositif destiné à la mise en oeuvre du procédé selon la revendication 7, **caractérisé en ce que** la sortie (7) d'au moins un forage d'injection (3) et la sortie (5) d'au moins un forage d'extraction (4) sont reliées les unes aux autres à travers un conduit (6) pourvu d'un échangeur de chaleur (8) et que le dispositif comporte au moins une pompe destinée à injecter dans la formation (1), sous pression, de l'eau avec du CO₂ et, le cas échéant, des additifs.
